# EUROPÄISCHE PATENTSCHRIFT

(11) **EP 3 718 391 B1**
(45) Veröffentlichungstag und Bekanntmachung des Hinweises auf die Patenterteilung: **13.08.2025**
(21) Anmeldenummer: 20150918.9
(22) Anmeldetag: 09.01.2020
(51) Int. Cl.: A01D 43/08, A01F 29/22

(54) **FELDHÄCKSLER**
FORAGE HARVESTER
RAMASSEUSE-HACHEUSE

(30) Priorität: 01.04.2019 DE 102019108472
(43) Veröffentlichungstag der Anmeldung: 07.10.2020
(73) Patentinhaber: CLAAS Selbstfahrende Erntemaschinen GmbH, 33428 Harsewinkel (DE)
(72) Erfinder: Heitmann, Christoph, 48231 Warendorf (DE); Bönig, Ingo, 33330 Gütersloh (DE)
(74) Vertreter: CLAAS Gruppe

(56) Entgegenhaltungen:
- EP-A1- 2 436 258
- DE-A1- 19 524 752

## Beschreibung

Die Erfindung betrifft einen Feldhäcksler mit mehreren Arbeitsorganen zur Durchführung und/oder Unterstützung landwirtschaftlicher Arbeit gemäß dem Oberbegriff von Anspruch 1.

Der in Rede stehende Feldhäcksler weist mehrere Arbeitsorgane zur Durchführung und/oder Unterstützung landwirtschaftlicher Arbeit auf. Eines der Arbeitsorgane ist ein Häckselorgan zum Häckseln eines von dem Feldhäcksler aufgenommenen Erntegutstroms. Dieses Häckselorgan weist zumeist eine Häckseltrommel mit daran angeordneten Häckselmessern sowie eine mit der Häckselmesseranordnung zusammenwirkende Gegenschneidanordnung mit einer Gegenschneide auf.

Während des Arbeitsprozesses des Feldhäckslers nutzen sich die an der Häckseltrommel befestigten Häckselmesser durch das Häckseln des Erntegutstroms mit zunehmender Arbeitsdauer ab. Insbesondere kommt es zu einem verschleißbedingten Abtrag im Bereich der Schneidkanten der Häckselmesser, was zu einer Herabsetzung der Schnittqualität und aufgrund des erhöhten Leistungsbedarfs der Häckseltrommel zu einer geringeren Durchsatzleistung.

Die Schneidschärfe der Häckselmesser hat insofern bei einem Feldhäcksler einen starken Einfluss auf die Betriebskosten der Erntemaschine. Werden diese nur selten geschliffen, nimmt die Effizienz des Feldhäckslers ab, so dass die Kosten aufgrund des erhöhten Energiebedarfs steigen. Zu häufiges Schleifen der Häckselmesser führt allerdings zu einem erhöhten Messerverschleiß und erfordert ein früheres Austauschen der Häckselmesser, welches ebenfalls die Betriebskosten erhöht. Die Beurteilung, ob die Schneiden der Häckselmesser scharf genug sind, oder, ob sie geschliffen werden müssen, ist für den Bediener des Feldhäckslers bei der landwirtschaftlichen Arbeit aus der Fahrerkabine mitunter nur schwer zu beurteilen. Ein Stoppen der landwirtschaftlichen Arbeit und händisches Überprüfen der Schneidschärfe ist aufwendig und erfordert zudem viel Erfahrung des Bedieners.

Um einen optimalen Zeitpunkt zum Nachschleifen der Häckselmesser zu bestimmen, schlägt die EP 2 225 931 B1 vor, eine Prognose über den zu erwartenden Verschleiß der Häckselmesser anhand wenigstens eines während des Ernteprozesses ermittelten Erntegut- und/oder Maschinenparameters abzuleiten. Dies führt bereits zu guten Ergebnissen. Es besteht dennoch der Bedarf, die Schneidschärfe der Häckselmesser noch zuverlässiger und präziser zu ermitteln. Ein weiterer Feldhäcksler ist aus der EP 2 436 258 A1 bekannt geworden.

Der Erfindung liegt das Problem zu Grunde, den bekannten Feldhäcksler derart auszugestalten und weiterzubilden, dass die Schneidschärfe möglichst zuverlässig und präzise bestimmt werden kann, um einen geeigneten Zeitpunkt zum Schleifen der Häckselmesser zu bestimmen.

Das obige Problem wird bei einem Feldhäcksler gemäß dem Oberbegriff von Anspruch 1 durch die Merkmale des kennzeichnenden Teils von Anspruch 1 gelöst.

Wesentlich ist die grundsätzliche Überlegung, dass der Schlupf des Häckselorgans gemeinsam mit dem zunehmenden Verschleiß der Häckselmesser ansteigt. Insofern ist der Schlupf ein geeigneter Parameter zur Ableitung eines Maß für die Schneidschärfe der Häckselmesser. Der Schlupf ist besonders geeignet, da er besonders einfach gemessen werden kann und mit zunehmendem Verschleiß der Häckselmesser bei ansonsten konstanten Randbedingungen das für das Häckseln des Erntegutstroms notwendige Moment und in der Konsequenz auch der Schlupf des Häckselorgans ansteigt. Eine entsprechende Ermittlung des Maßes für die Schneidschärfe kann in optimaler Weise von einem Fahrerassistenzsystem des Feldhäckslers durchgeführt werden.

Im Einzelnen wird vorgeschlagen, dass das Fahrerassistenzsystem derart konfiguriert ist, dass im Antriebsstrang des Häckselorgans ein Schlupf ermittelt und dieser Schlupf in der Analyse-Auswert-Einheit in der Weise verarbeitet wird, dass ein Maß für die Schneidschärfe der Häckselmesser abgeleitet wird.

Eine bevorzugte Ausgestaltung des Häckselorgans ist in Anspruch 2 beschrieben. Sie hat sich für ein effizientes Häckseln des Erntegutstroms bewährt. Gemäß Anspruch 3 kann eine Schleifvorrichtung vorgesehen sein.

Die Ansprüche 4 und 5 beschreiben bevorzugte Ausbildungen des Antriebsstrangs, welche ein zuverlässiges Antreiben des Häckselwerks sowie eine zuverlässige und präzise Bestimmung des Schlupfes erlauben.

In den Ansprüchen 6 und 7 ist eine Sensoranordnung beschrieben, mittels welcher der Schlupf ermittelt sowie weitere Randbedingungen zum Ableiten eines zuverlässigen und präzisen Maßes für die Schneidschärfe der Häckselmesser bestimmt werden können.

In den Ansprüchen 8 bis 11 sind bevorzugte Ausbildungen der Analyse-Auswert-Einheit sowie der Verarbeitung des Schlupfes in derselben beschrieben, um das Maß für die Schneidschärfe abzuleiten. Dies erfolgt bevorzugt unter Einbeziehung mindestens eines Kennfeldes in der in diesen Ansprüchen beschriebenen Weise.

Die Ansprüche 12 bis 14 beschreiben bevorzugte Formen der Visualisierung des Maßes für die Schneidschärfe. Gemäß der Ausgestaltung von Anspruch 12 wird die Schneidschärfe in einer Anzeigeeinheit dargestellt, so dass ein Bediener während des Erntevorgangs immer über die Schneidschärfe der Häckselmesser informiert ist. Er muss dazu nicht die Fahrerkabine verlassen. Weiter erleichtert werden kann ihm die Beurteilung der aktuellen Schneidschärfe anhand eine Skala, wie diese im Anspruch 13 vorgeschlagen wird. Die Icons dieser Skala können vom Bediener, wie im Anspruch 14 beschrieben, gesetzt und/oder verschoben werden, um ihm die Beurteilung der aktuell angezeigten Schneidschärfe im Arbeitsprozess weiter zu erleichtern.

Nach einer weiteren Lehre gemäß Anspruch 15, der eigenständige Bedeutung zukommt, wird ein Verfahren zum Betreiben eines Feldhäckslers als solches beansprucht. Auf alle Ausführungen zu dem vorschlagsgemäßen Feldhäcksler darf verwiesen werden.

Im Folgenden wird die Erfindung anhand einer lediglich Ausführungsbeispiele darstellenden Zeichnung näher erläutert. In der Zeichnung zeigt
- Fig. 1: einen vorschlagsgemäßen Feldhäcksler und in vergrößerter Ansicht das Häckselorgan des Feldhäckslers,
- Fig. 2: beispielhaft zwei Kennfelder zur Ableitung eines Maßes für die Schneidschärfe der Häckselmesser,
- Fig. 3: eine Anzeigeeinheit zum Anzeigen der Schneidschärfe für den Bediener des Feldhäckslers.

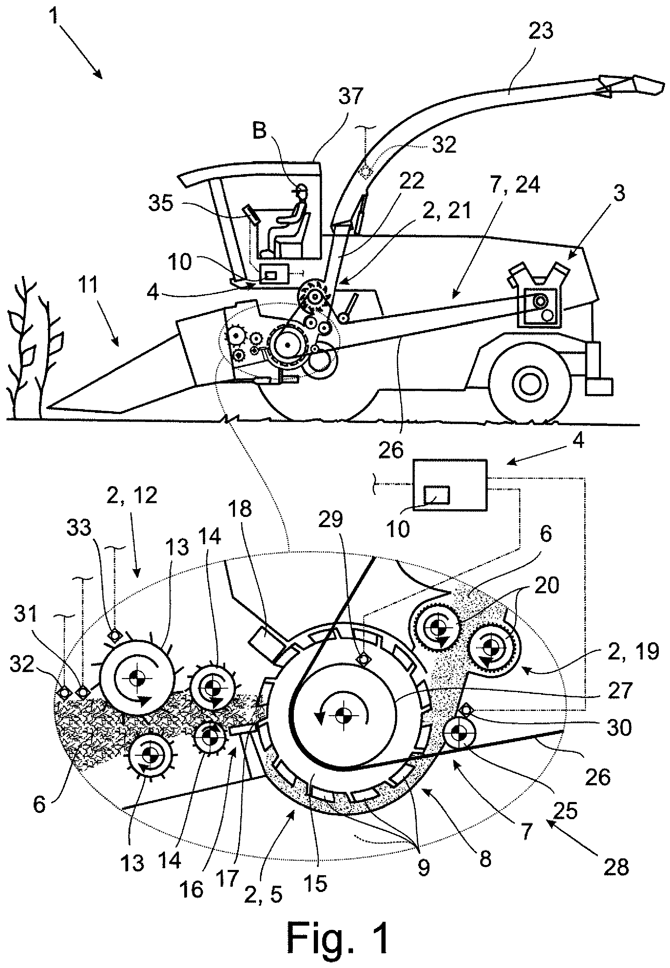

In der Fig. 1 ist ein vorschlagsgemäßer Feldhäcksler 1 gezeigt. Er ist hier als selbstfahrender Feldhäcksler 1 ausgebildet. Der Feldhäcksler 1 weist mehrere Arbeitsorgane 2 zur Durchführung und/oder Unterstützung landwirtschaftlicher Arbeit sowie eine Antriebsanordnung 3 zum Antreiben der Arbeitsorgane 2 und ein Fahrerassistenzsystem 4 zur Ansteuerung und/oder Überwachung der Arbeitsorgane 2 auf.

Eines der Arbeitsorgane 2 ist ein Häckselorgan 5 zum Häckseln eines von dem Feldhäcksler 1 aufgenommenen Erntegutstroms 6. Das Häckselorgan 5 wird, wie in der Fig. 1 gezeigt, über einen Antriebsstrang 7 von der Antriebsanordnung 3 angetrieben. Es weist eine Häckselmesseranordnung 8 mit Häckselmessern 9 auf. Während der Durchführung landwirtschaftlicher Arbeit, hier eines Ernteprozesses, verschleißen die Häckselmesser 9. Sie müssen daher von Zeit zu Zeit geschärft werden, um einen effizienten Betrieb des Feldhäckslers 1 zu gewährleisten.

Ferner weist das Fahrerassistenzsystem 4 vorschlagsgemäß eine Analyse-Auswert-Einheit 10 auf.

Wesentlich ist nun, dass das Fahrerassistenzsystem 4 derart konfiguriert ist, dass im Antriebsstrang 7 des Häckselorgans 5 ein Schlupf ermittelt und dieser Schlupf in der Analyse-Auswert-Einheit 10 in der Weise verarbeitet wird, dass ein Maß für die Schneidschärfe der Häckselmesser 9 abgeleitet wird. Der Schlupf des Häckselorgans 5 hat sich als besonders zuverlässiger und präziser Indikator für die Bestimmung der Schneidschärfe erwiesen.

Das Ermitteln des Schlupfes ermöglicht während der landwirtschaftlichen Arbeit des Feldhäckslers 1 ein einfaches, kontinuierliches oder zyklisches Ableiten der Schneidschärfe der Häckselmesser 9. So ist ein Bediener des Feldhäckslers 1 auch während der landwirtschaftlichen Arbeit ständig über die, insbesondere aktuelle, Schneidschärfe informiert. Er kann das Nachschärfen der Häckselmesser 9 besonders gut und einfach in den weiteren landwirtschaftlichen Arbeitsprozess einplanen.

Während der landwirtschaftlichen Arbeit des Feldhäckslers 1, im Ausführungsbeispiel während des Ernteprozesses, wird das Erntegut als Erntegutstrom 6 von einem Vorsatzgerät 11 aufgenommen und einer Einzugvorrichtung 12 zugeführt. Die Einzugvorrichtung 12 weist im Ausführungsbeispiel ein erstes Paar Einzugwalzen 13 und ein zweites Paar Einzugwalzen 14 auf. Sie dienen dem Einzug und Vorpressen des aufgenommenen Erntegutstroms 6. Durch die Einzugwalzen 13, 14 kann die Vorpresskraft auf den Erntegutstrom 6 als auch über ihre Antriebsgeschwindigkeit die Einzugsgeschwindigkeit des Erntegutstroms 6 verstellt werden, um den Feldhäcksler 1 an sich verändernde Erntegutmengen anzupassen. Die Einzugvorrichtung 12 ist ein weiteres Arbeitsorgan des Feldhäckslers 1.

Der Einzugvorrichtung 12 ist das Häckselorgan 5 nachgeordnet. Das Häckselorgan 5 weist wie bereits beschrieben eine Häckselmesseranordnung 8 auf. Die Häckselmesseranordnung 8 weist eine Häckseltrommel 15 auf, an der die Häckselmesser 9 der Häckselmesseranordnung 8 angeordnet sind. Ferner weist das Häckselorgan 5 eine mit der Häckselmesseranordnung 8 zusammenwirkende Gegenschneidanordnung 16 mit einer Gegenschneide 17 auf. Die rotierend angetriebene Häckseltrommel 15 zerkleinert das in Form des Erntegutstroms 6 zugeführte Erntegut, indem es dieses häckselt.

Ferner kann der Feldhäcksler 1 eine durch einen Antrieb antreibbare und nur schematisch gezeigte Schleifvorrichtung 18 mit einem Schleifwerkzeug zum Schleifen der Häckselmesser 9 aufweisen. Hierdurch können die Häckselmesser 9 in zyklischen Abständen - ohne, dass diese ausgebaut werden müssen - geschliffen werden.

Der aus dem Häckselorgan 5 austretende Erntegutstrom 6 aus zerkleinertem Erntegut kann einer vorzugsweise vorgesehenen Nachbearbeitungseinrichtung 19 zugeführt werden. Diese ist ebenfalls ein Arbeitsorgan 2 des Feldhäckslers 1. Die Nachbearbeitungsvorrichtung 19, auch als Konditioniereinrichtung oder Corncracker bezeichnet, dient dem Aufschließen des Ernteguts, insbesondere von Maiskörnern im Erntegutstrom 6, um die Verwertbarkeit bzw. Energieausbeute bei einem Einsatz als Futtermittel bzw. in einer Biogasanlage zu erhöhen. Derartige Nachbearbeitungsvorrichtungen 19 weisen in der Regel ein profiliertes Walzenpaar auf, wobei die Walzen 20 zumeist mit unterschiedlichen Drehzahlen angetrieben werden.

Von dem Häckselorgan 5, bzw. der vorzugsweise vorgesehenen Nachbearbeitungsvorrichtung 19, gelangt der Erntegutstrom 6 zu einer Nachbeschleunigungsvorrichtung 21. Die Nachbeschleunigungsvorrichtung 21 ist ein Arbeitsorgan 2. Die Nachbeschleunigungsvorrichtung 21 fördert den Erntegutstrom 6 durch einen Förderschacht 22 und eine sich daran anschließende als Auswurfkrümmer ausgebildete Auswurfvorrichtung 23 an ein in der Nähe zu dem Feldhäcksler 1 fahrendes - nicht dargestelltes - Transportfahrzeug.

Die Antriebsanordnung 3 ist hier und vorzugsweise als Verbrennungsmotor ausgebildet. Die Antriebsanordnung 3 treibt über mindestens einen Antriebsstrang 7 die Arbeitsorgane 2 an. Hier und vorzugsweise weist der Antriebsstrang 7 einen Riementrieb 24 auf, über welchen die Häckseltrommel 15 angetrieben wird. Der Riementrieb 24 ist hier als Keilriementrieb ausgebildet. Wie in der Fig. 1 gezeigt, wird über den Riementrieb 24 auch die Nachbeschleunigungsvorrichtung 19 angetrieben. Zusätzlich kann ein, insbesondere hydraulischer, Nebenantriebsstrang vorgesehen sein, über welchen andere Arbeitsorgane 2 des Feldhäckslers 1 angetrieben werden.

Der ermittelte Schlupf - welcher in der Analyse-Auswerte-Einheit zur Ableitung des Maßes für die Schneidschärfe der Häckselmesser 9 verarbeitet wird - wird vorzugsweise wie nachfolgend beschrieben bestimmt. Gemeint ist hier der Schlupf, insbesondere Dehnschlupf, des Riementriebs 24 an der Häckseltrommel 15. Der Schlupf ist hier der Schlupf zwischen einem mit der Häckseltrommel 15, insbesondere drehfest, verbundenen Riemenrad 27 und dem antreibenden Riemen 26.

Im Ausführungsbeispiel und vorzugsweise ist im Antriebsstrang 7 eine Laufrolle 25 für die Ermittlung einer Referenzdrehzahl angeordnet, wobei mit der Referenzdrehzahl der Schlupf ermittelt wird. Im Ausführungsbeispiel ist die Laufrolle 25 dem Häckselorgan 5 im Antriebsstrang 7 nachgeordnet. Das heißt, in Umlaufrichtung des Riemens 26 des Riementriebs 24 ist die Laufrolle 25 abtriebsseitig des Häckselorgans 5 angeordnet. Hier ist die Laufrolle 25 einem mit der Häckseltrommel 15 drehfest verbundenem Riemenrad 27 im Riementrieb 24 direkt nachgeordnet. Das heißt, entlang des Riemens 26 sind zwischen dem Riemenrad 27 und der Laufrolle 25 sind keine weiteren Leistungsabnehmer angeordnet. Auf diese Weise kann ein eindeutig der Belastung der Häckseltrommel 15 zuordenbarer Schlupf ermittelt werden und zwar insbesondere auch, wenn weitere Arbeitsorgane 2 über den Riemen 26 angetrieben werden.

Zum sensorischen Ermitteln des Schlupfes im Antriebsstrang 7 des Häckselorgans 5 weist das Fahrerassistenzsystem 4 eine Sensoranordnung 28 auf. Die Sensoranordnung 28 weist einen Drehzahlsensor 29 für die Ermittlung der Drehzahl der Häckseltrommel 15 und einen Drehzahlsensor 30 für die Ermittlung der Referenzdrehzahl der Laufrolle 25 auf. Aus der Drehzahl der Häckseltrommel 15 und der Referenzdrehzahl der Laufrolle 25 wird der Schlupf der Häckseltrommel 15 ermittelt. Diesen Schlupf kann die Analyse-Auswert-Einheit 10 dann verarbeiten und ein Maß für die Schneidschärfe der Häckselmesser 9 ableiten.

Zusätzlich oder alternativ kann die Sensoranordnung 28 einen Schichthöhensensor 31 zur Bestimmung der Schichthöhe des Erntegutstroms 6 im Feldhäcksler 1 aufweisen. Wie in der Fig. 1 gezeigt, ist der Schichthöhensensor 31 in der Einzugvorrichtung 12 des Feldhäckslers 1 angeordnet.

Ferner kann ein Feuchtesensor 32 zur Bestimmung der Feuchte des Erntegutstroms 6 vorgesehen sein. Dieser ist hier und vorzugsweise in der Einzugvorrichtung 12 des Feldhäckslers 1 und/oder in einem Auswurfkrümmer des Feldhäckslers 1 angeordnet. Der Feuchtesensor 32 ist vorzugsweise als NIR-Sensor (Nahinfrarot-Sensor) ausgebildet.

Zusätzlich kann ein Sensor 33 zur Erfassung der Strömungsgeschwindigkeit des Erntegutstroms 6 im Feldhäcksler 1 vorgesehen sein. Bei der Strömungsgeschwindigkeit des Erntegutes 6 handelt es sich im Ausführungsbeispiel und vorzugsweise um die Einzugsgeschwindigkeit des Erntegutstroms 6. Der Sensor 33 ist hier und vorzugsweise ebenfalls in der Einzugvorrichtung 12 des Feldhäckslers 1 angeordnet.

Bei dem Sensor 33 zur Erfassung der Strömungsgeschwindigkeit kann es sich um einen oder mehrere Drehzahlsensoren handeln, welche die Drehzahl einer oder mehrerer Einzugwalzen 13, 14 erfassen.

Die Analyse-Auswert-Einheit 10 verarbeitet die erfassten Sensordaten 28, insbesondere den sensorisch ermittelten Schlupf und/oder die Schichthöhe und/oder die Feuchte und/oder die Strömungsgeschwindigkeit, und leitet basierend auf diesen das Maß für die Schneidschärfe ab.

Hier erstellt die Analyse-Auswert-Einheit 10 basierend auf den erfassten Sensordaten der Sensoranordnung 28 ein Kennfeld 34 und/oder passt ein, beispielsweise hinterlegtes, Kennfeld 34 an und/oder wählt dieses aus. Das Kennfeld 34 kann beispielsweise in der Form einer Polynomfunktion vorliegen.

Das Kennfeld 34 wird hier basierend auf dem sensorisch ermittelten Schlupf und/oder der Parameter "Schichthöhe" und/oder "Feuchte" und/oder "Strömungsgeschwindigkeit" bestimmt bzw. angepasst. Die Werte für diese Parameter werden hier und vorzugsweise zur Bestimmung des Kennfeldes 34 von der Sensoranordnung 28 mit den zuvor beschriebenen Sensoren 29, 30, 31, 32, 33 bereitgestellt.

Aus den erfassten Sensordaten bzw. dem, insbesondere aktuellen, Kennfeld 34 leitet die Analyse-Auswert-Einheit 10 dann ein Maß für die Schneidschärfe ab. Die Nutzung eines Kennfeldes 34 hat sich als besonders vorteilhaft für eine zuverlässige und präzise Ableitung des Maßes für die Schneidschärfe erwiesen. Mittels des Kennfelds 34 kann zur Ableitung des Maßes der Schneidschärfe der Anteil der Belastung des Häckselorgans bestimmt werden, welcher auf die Abstumpfung der Häckselmesser 9 zurückgeht.

Vorzugsweise startet die Analyse-Auswert-Einheit 10 mit Beginn des landwirtschaftlichen Arbeitsprozesses und/oder einer Einfahrt in ein Feld mit einem Initial-Kennfeld als Kennfeld 34, welches während des landwirtschaftlichen Arbeitsprozesses an diesen angepasst wird. Hier und vorzugsweise erfolgt die Anpassung auf der Basis der Sensordaten der Sensoranordnung 28. Vorzugsweise wird das Kennfeld 34 während des landwirtschaftlichen Arbeitsprozesses, insbesondere zyklisch oder kontinuierlich, an den landwirtschaftlichen Arbeitsprozess angepasst.

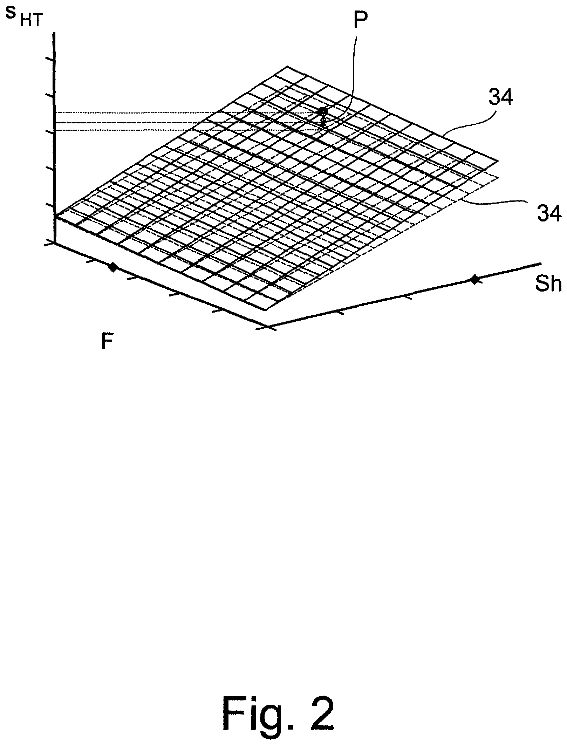

Zwei unterschiedliche Kennfelder 34 zur Ableitung der Schneidschärfe sind beispielhaft in der Fig. 2 gezeigt. Das Kennfeld 34 mit gestrichelten Linien ist ein Kennfeld 34 für Häckselmesser 9 mit einer hohen Schneidschärfe, während das Kennfeld 34 mit durchgezogenen Linien ein Kennfeld 34 für Schneidmesser 9 mit einer niedrigen Schneidschärfe ist. Es lag in der Analyse-Auswert-Einheit zu einem späteren Zeitpunkt vor. Die Fig. 2 zeigt die zwei Kennfelder 34 qualitativ für eine konstante Strömungsgeschwindigkeit, wobei Sh die Schichthöhe, F die Feuchte des Ernteguts und S_{HT} der ermittelte Schlupf ist. Das Kennfeld 34 ist hier ein Kennfeld 34 mit den Größen Schlupf und/oder Schichthöhe und/oder Feuchte und/oder Strömungsgeschwindigkeit, insbesondere Einzugsgeschwindigkeit.

Hier und vorzugsweise leitet die Analyse-Auswert-Einheit 10 das Maß für die Schneidschärfe aus mindestens einem Charakteristika des Kennfeldes 34, beispielsweise einer Steigung, und/oder einer Änderung des Kennfeldes 34 und/oder gegenüber in der Analyse-Auswert-Einheit 10 hinterlegten Vergleichsdaten ab. Die Vergleichsdaten wurden vorzugsweise aus Expertenwissen und/oder durch Simulation und/oder durch Feldversuche generiert. Durch das mindestens eine Charakteristika und/oder die Änderung des Kennfeldes 34 und/oder den Vergleich des Kennfeldes 34 mit den hinterlegten Vergleichsdaten kann die Schneidschärfe einfach abgeleitet werden. Die Vergleichsdaten können insbesondere ein Vergleichskennfeld oder ein Vergleichs-Charakteristika für das Kennfeld 34 sein.

Bei der Ableitung des Maßes für die Schneidschärfe, hier aus dem Kennfeld 34, werden die Parameter für die Schichthöhe des Erntegutstroms 6 und/oder die Feuchte des Erntegutstroms 6 und/oder die Strömungsgeschwindigkeit des Erntegutstroms 6, insbesondere die Drehzahl der Einzugwalzen, als feststehender Beobachtungspunkt P angenommen. Alternativ können auch mehrere Beobachtungspunkte für die Ableitung des Maßes für die Schneidschärfe herangezogen werden. Für diese werden vorzugsweise die Parameter für die Schichthöhe des Erntegutstroms 6 und/oder die Feuchte des Erntegutstroms 6 und/oder die Strömungsgeschwindigkeit des Erntegutstroms 6, insbesondere die Drehzahl der Einzugwalzen, ebenfalls als feststehend angenommen. Ferner kann bei der Ableitung des Maßes für die Schneidschärfe ein Mittelwert aus mehreren Beobachtungspunkten P angenommen werden.

Zur Verarbeitung der Sensordaten der Sensoranordnung 28, insbesondere zur Anpassung des Kennfelds 34, und zur Ableitung des Maßes für die Schneidschärfe weist die Analyse-Auswert-Einheit 10 eine Recheneinheit auf.

Durch die Ableitung des Maßes für die Schneidschärfe kann die Schneidschärfe für den Bediener B einfach visualisiert werden. Er hat hierdurch während der landwirtschaftlichen Arbeit eine Übersicht über die aktuelle Schneidschärfe der Häckselmesser 9.

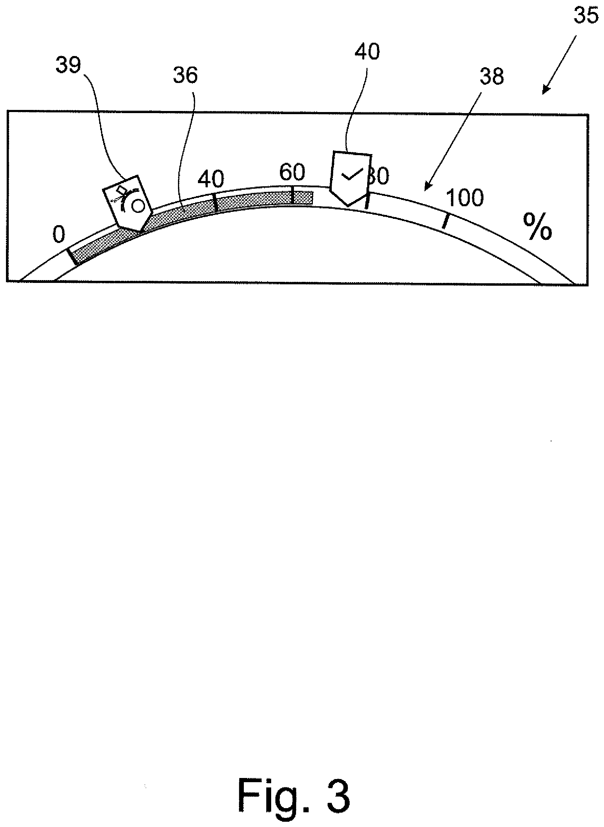

Im Ausführungsbeispiel weist das Fahrerassistenzsystem 4 eine Anzeigeeinheit 35 hierfür auf. Die Anzeige der Anzeigeeinheit 35 ist in der Fig. 3 dargestellt. Das Fahrerassistenzsystem 4 zeigt die Schneidschärfe in der Form eines Balkendiagramms 36 an. Das Balkendiagramm 36 ist im Ausführungsbeispiel gewölbt. Die Anzeigeeinheit 35 ist wie in der Fig. 1 gezeigt in einer Fahrerkabine 37 des Feldhäckslers 1 angeordnet.

Fig. 3 zeigt, dass die Schneidschärfe auf der Anzeigeeinheit 35 anhand einer Skala 38 angezeigt wird. Im Ausführungsbeispiel ist dies eine Prozentskala, welche von 0 bis 100 Prozent reicht. 0% bedeutet eine ganz geringe Schneidschärfe, also stumpfe Häckselmesser 9, und 100% bedeutet eine sehr hohe Schneidschärfe, also sehr scharfe Häckselmesser 9. Ferner weist die Skala 38 ein Mindestschärfe-Icon 39 und/oder ein Ausgangsschärfe-Icon 40 auf. Das Mindestschärfe-Icon 39 zeigt eine Schneidschärfe an, zu der die Häckselmesser 9 nachgeschärft werden sollten. Das Ausgangsschärfe-Icon 40 zeigt eine Schneidschärfe an, die mit dem letzten Nachschärfen erreicht wurde. Zur Orientierung kann der Bediener B des Feldhäckslers 1 die Position des Mindestschärfe-Icons 39 und/oder des Ausgangsschärfe-Icons 40 auf der Skala 38 setzen und/oder verschieben. Auf diese Weise hat er einen einfachen Überblick über die aktuelle Schneidschärfe.

Basierend auf dieser Anzeige kann er einfach einen geeigneten Zeitpunkt zum nachschärfen der Häckselmesser 9 wählen und einen Schleifvorgang starten. Dabei kann er vorzugsweise die Anzahl der Schleifzyklen wählen bzw. festlegen.

Dem Bediener B wird nach einem Schleifvorgang mit der von ihm gewählten Anzahl an Schleifzyklen anhand der angezeigten neuen Position des Ausgangsschärfe-Icons 40 angezeigt, welchen Grad der Schneidschärfe die Häckselmesser 9 durch den Schleifvorgang wieder erreicht haben. Dies erfolgt hier und vorzugsweise erst wieder nachdem der Erntevorgang fortgesetzt bzw. ein neuer Erntevorgang begonnen wurde. Auf dieser Basis kann der Bediener B für den nächsten Schleifvorgang die Anzahl der durchzuführenden Schleifzyklen anpassen.

Vorzugsweise ist das Fahrerassistenzsystem 4 derart ausgebildet, dass es, insbesondere beim Starten des Feldhäckslers 1 und/oder bei der Auswahl der entsprechenden Anzeige der Schneidschärfe, eine bevorzugte Position des Mindestschärfe-Icons 39 und/oder Ausgangsschärfe-Icons 40 vorschlägt oder dieses bzw. diese automatisiert setzt.

Insbesondere kann das Fahrerassistenzsystem 4 das Mindestschärfe-Icon 39 in Abhängigkeit von dem Erntegut, welches gerade geerntet wird bzw. geerntet werden soll, automatisiert setzen.

### Bezugszeichenliste

- 1: Feldhäcksler
- 2: Arbeitsorgane
- 3: Antriebsanordnung
- 4: Fahrerassistenzsystem
- 5: Häckselorgan
- 6: Erntegutstrom
- 7: Antriebsstrang
- 8: Häckselmesseranordnung
- 9: Häckselmesser
- 10: Analyse-Auswert-Einheit
- 11: Vorsatzgerät
- 12: Einzugvorrichtung
- 13: Einzugwalzen
- 14: Einzugwalzen
- 15: Häckseltrommel
- 16: Gegenschneidanordnung
- 17: Gegenschneide
- 18: Schleifvorrichtung
- 19: Nachbearbeitungsvorrichtung
- 20: Walzen
- 21: Nachbeschleunigungsvorrichtung
- 22: Förderschacht
- 23: Auswurfvorrichtung
- 24: Riementrieb
- 25: Laufrolle
- 26: Riemen
- 27: Riemenrad
- 28: Sensoranordnung
- 29: Drehzahlsensor
- 30: Drehzahlsensor
- 31: Schichthöhensensor
- 32: Feuchtesensor
- 33: Sensor zur Erfassung der Strömungsgeschwindigkeit
- 34: Kennfeld
- 35: Anzeigeeinheit
- 36: Balkendiagramm
- 37: Fahrerkabine
- 38: Skala
- 39: Mindestschärfe-Icon
- 40: Ausgangsschärfe-Icon

- B: Bediener
- P: Beobachtungspunkt

## Patentansprüche

1. Feldhäcksler mit mehreren Arbeitsorganen (2) zur Durchführung und/oder Unterstützung landwirtschaftlicher Arbeit, mit einer Antriebsanordnung (3) zum Antreiben der Arbeitsorgane (2) und mit einem Fahrerassistenzsystem (4) zur Ansteuerung und/oder Überwachung der Arbeitsorgane (2),
wobei ein Arbeitsorgan (2) ein Häckselorgan (5) zum Häckseln eines von dem Feldhäcksler (1) aufgenommenen Erntegutstroms (6) ist, wobei das Häckselorgan (5) über einen Antriebsstrang (7) von der Antriebsanordnung (3) angetrieben wird,
wobei das Häckselorgan (5) eine Häckselmesseranordnung (8) mit Häckselmessern (9) aufweist und wobei das Fahrerassistenzsystem (4) eine Analyse-Auswert-Einheit (10) aufweist,
**dadurch gekennzeichnet,**
**dass** das Fahrerassistenzsystem (4) derart konfiguriert ist, dass im Antriebsstrang (7) des Häckselorgans (5) ein Schlupf ermittelt und dieser Schlupf in der Analyse-Auswert-Einheit (10) in der Weise verarbeitet wird, dass ein Maß für die Schneidschärfe der Häckselmesser (9) abgeleitet wird, wobei das Fahrerassistenzsystem (4) eine Sensoranordnung (28) zum Ermitteln des Schlupfes im Antriebsstrang (7) des Häckselorgans (5) aufweist.

2. Feldhäcksler nach Anspruch 1, **dadurch gekennzeichnet, dass** die Häckselmesseranordnung (8) eine Häckseltrommel (15) aufweist, an der die Häckselmesser (9) angeordnet sind, und dass das Häckselorgan (5) eine mit der Häckselmesseranordnung (8) zusammenwirkende Gegenschneidanordnung (16) mit einer Gegenschneide (17) aufweist.

3. Feldhäcksler nach Anspruch 1 oder 2, **dadurch gekennzeichnet, dass** der Feldhäcksler (1) eine durch einen Antrieb antreibbare Schleifvorrichtung (18) mit einem Schleifwerkzeug zum Schleifen der Häckselmesser (9) aufweist.

4. Feldhäcksler nach einem der vorhergehenden Ansprüche, **dadurch gekennzeichnet, dass** der Antriebsstrang (7) einen Riementrieb (24) aufweist, über welchen die Häckseltrommel (15) angetrieben wird, und dass der ermittelte Schlupf der Schlupf des Riementriebs (24) an der Häckseltrommel (15) ist.

5. Feldhäcksler nach Anspruch 4, **dadurch gekennzeichnet, dass** im Antriebsstrang (7), insbesondere dem Häckselorgan (5) nachgeordnet, eine Laufrolle (25) für die Ermittlung einer Referenzdrehzahl angeordnet ist, wobei mit der Referenzdrehzahl der Schlupf ermittelt wird, vorzugsweise, dass die Laufrolle (25) einem mit der Häckseltrommel (15) drehfest verbundenen Riemenrad (27) der Häckseltrommel (15) im Riementrieb (24) direkt nachgeordnet ist.

6. Feldhäcksler nach Anspruch 5, **dadurch gekennzeichnet, dass** die Sensoranordnung (28) einen Drehzahlsensor (29) für die Ermittlung der Drehzahl der Häckseltrommel (15) und einen Drehzahlsensor (30) für die Ermittlung der Referenzdrehzahl der Laufrolle (25) aufweist und dass aus der Drehzahl der Häckseltrommel (15) und der Referenzdrehzahl der Schlupf der Häckseltrommel (15) ermittelt wird.

7. Feldhäcksler nach Anspruch 6, **dadurch gekennzeichnet, dass** die Sensoranordnung (28) mindestens einen Sensor (31, 32, 33) aufweist aus der Gruppe umfassend:
einen Schichthöhensensor (31) zur Bestimmung der Schichthöhe des Erntegutstroms (6) im Feldhäcksler (1), wobei der Schichthöhensensor (31) insbesondere in der Einzugvorrichtung (12) des Feldhäckslers (1) angeordnet ist,
einen Feuchtesensor (32) zur Bestimmung der Feuchte des Erntegutstroms (6) im Feldhäcksler (1), wobei der Feuchtesensor (32) insbesondere in der Einzugvorrichtung (12) und/oder in dem Auswurfkrümmer des Feldhäckslers (1) angeordnet ist,
einen Sensor (33) zur Erfassung der Strömungsgeschwindigkeit des Erntegutstroms (6) im Feldhäcksler (1), wobei der Sensor (33) vorzugsweise in der Einzugvorrichtung (12) angeordnet ist.

8. Feldhäcksler nach Anspruch 7, **dadurch gekennzeichnet, dass** die Analyse-Auswert-Einheit (10) basierend auf den erfassten Sensordaten der Sensoranordnung (28), insbesondere aus dem sensorisch ermittelten Schlupf und/oder den Parametern "Schichthöhe" und/oder "Feuchte" und/oder "Strömungsgeschwindigkeit", ein Kennfeld (34) erstellt und/oder ein Kennfeld (34) anpasst und/oder ein Kennfeld (34) auswählt.

9. Feldhäcksler nach einem der Ansprüche 6 bis 8, **dadurch gekennzeichnet, dass** die Analyse-Auswert-Einheit (10) mit Beginn des landwirtschaftlichen Arbeitsprozesses und/oder einer Einfahrt in ein Feld mit einem Initial-Kennfeld als Kennfeld (34) startet, welches während des landwirtschaftlichen Arbeitsprozesses, insbesondere basierend auf den Sensordaten der Sensoranordnung, an diesen angepasst wird.

10. Feldhäcksler nach Anspruch 9, **dadurch gekennzeichnet, dass** die Analyse-Auswert-Einheit (10) aus dem Kennfeld (34) das Maß für die Messerschärfe ableitet, vorzugsweise, dass die Analyse-Auswert-Einheit (10) das Maß für die Schneidschärfe aus mindestens einem Charakteristika des Kennfeldes (34) und/oder einer Änderung des Kennfeldes (34) und/oder gegenüber Vergleichsdaten ableitet.

11. Feldhäcksler nach einem der Ansprüche 9 oder 10, **dadurch gekennzeichnet, dass** bei der Ableitung des Maßes für die Schneidschärfe, insbesondere aus dem Kennfeld, die Parameter für die Schichthöhe des Erntegutstroms (6) und/oder die Feuchte des Erntegutstroms (6) und/oder die Strömungsgeschwindigkeit des Erntegutstroms (6), insbesondere die Drehzahl einer Einzugwalze (13, 14), als mindestens ein feststehender Beobachtungspunkt (P) angenommen werden.

12. Feldhäcksler nach einem der vorhergehenden Ansprüche, **dadurch gekennzeichnet, dass** das Fahrerassistenzsystem (4) eine Anzeigeeinheit (35) zum Anzeigen der Schneidschärfe aufweist, vorzugsweise in der Form eines Balkendiagramms (36).

13. Feldhäcksler nach einem der vorhergehenden Ansprüche, **dadurch gekennzeichnet, dass** die Schneidschärfe auf der Anzeigeeinheit (35) anhand einer Skala (38) angezeigt wird, wobei die Skala (38) ein Mindestschärfe-Icon (39) aufweist, welches eine Schneidschärfe anzeigt, zu der die Häckselmesser (9) nachgeschärft werden, und/oder ein Ausgangsschärfe-Icon (40) aufweist, welches eine Schneidschärfe anzeigt, die mit dem letzten Nachschärfen erreicht wurde.

14. Feldhäcksler nach Anspruch 13, **dadurch gekennzeichnet, dass** die Position des Mindestschärfe-Icons (39) und/oder des Ausgangsschärfe-Icons (40) vom Bediener auf der Skala (38) setzbar und/oder verschiebbar ist.

15. Verfahren zum Betreiben eines Feldhäckslers (1) gemäß einem der Ansprüche 1 bis 14,
**dadurch gekennzeichnet,**
**dass** im Antriebsstrang (7) des Häckselorgans (5) ein Schlupf ermittelt und dieser Schlupf in der Analyse-Auswert-Einheit (10) in der Weise verarbeitet wird, dass ein Maß für die Schneidschärfe der Häckselmesser (9) abgeleitet wird.

## Claims

1. A forage harvester with a plurality of working units (2) for carrying out and/or supporting agricultural work, with a drive assembly (3) for driving the working units (2) and with a driver assistance system (4) for controlling and/or monitoring the working units (2),
wherein one working unit (2) is a chopping unit (5) for chopping a flow of harvested material (6) picked up by the forage harvester (1), wherein the chopping unit (5) is driven from the drive assembly (3) via a drive train (7),
wherein the chopping unit (5) has a chopping knife assembly (8) with chopping knives (9) and wherein the driver assistance system (4) has an analysis/evaluation unit (10),
**characterized in that**
the driver assistance system (4) is configured in a manner such that a slippage in the drive train (7) of the chopping unit (5) is determined and this slippage is processed in the analysis/evaluation unit (10) in a manner such that a measure of the cutting sharpness of the chopping knives (9) is derived,
wherein the driver assistance system (4) has a sensor assembly (28) for the determination of the slippage in the drive train (7) of the chopping unit (5).

2. The forage harvester according to claim 1, **characterized in that** the chopping knife assembly (8) has a chopping drum (15) on which the chopping knives (9) are disposed, and **in that** the chopping unit (5) has a shear bar assembly (16) with a shear bar (17) which cooperates with the chopping knife assembly (8).

3. The forage harvester according to claim 1 or claim 2, **characterized in that** the forage harvester (1) has a sharpening device (18) which can be driven by a drive, with a sharpening tool for sharpening the chopping knives (9).

4. The forage harvester according to one of the preceding claims, **characterized in that** the drive train (7) has a belt drive (24), via which the chopping drum (15) is driven, and **in that** the slippage which is determined is the slippage of the belt drive (24) on the chopping drum (15).

5. The forage harvester according to claim 4, **characterized in that** an idler pulley (25) for the determination of a reference speed is disposed in the drive train (7), in particular downstream of the chopping unit (5), wherein the slippage is determined with the reference speed, preferably **in that** the idler pulley (25) is disposed in the belt drive (24) directly downstream of a belt pulley (27) of the chopping drum (15) which is connected to the chopping drum (15) in a manner which is fixed against rotation.

6. The forage harvester according to claim 5, **characterized in that** the sensor assembly (28) has a speed sensor (29) for the determination of the speed of the chopping drum (15) and a speed sensor (30) for the determination of the reference speed of the idler pulley (25) and **in that** the slippage of the chopping drum (15) is determined from the speed of the chopping drum (15) and from the reference speed.

7. The forage harvester according to claim 6, **characterized in that** the sensor assembly (28) has at least one sensor (31, 32, 33) from the group comprising:
a layer height sensor (31) for determining the layer height of the flow of harvested material (6) in the forage harvester (1), wherein in particular, the layer height sensor (31) is disposed in the intake device (12) of the forage harvester (1),
a moisture sensor (32) for determining the moisture content of the flow of harvested material (6) in the forage harvester (1),
wherein in particular, the moisture sensor (32) is disposed in the intake device (12) and/or in the ejection manifold of the forage harvester (1),
a sensor (33) for the detection of the flow rate of the flow of harvested material (6) in the forage harvester (1), wherein preferably, the sensor (33) is disposed in the intake device (12).

8. The forage harvester according to claim 7, **characterized in that**, on the basis of the detected sensor data of the sensor assembly (28), in particular from the sensorially determined slippage and/or from the "layer height" and/or "moisture content" and/or "flow rate" parameters, the analysis/evaluation unit (10) generates a characteristic diagram (34) and/or adjusts a characteristic diagram (34) and/or selects a characteristic diagram (34).

9. The forage harvester according to one of claims 6 to 8, **characterized in that** with the commencement of the agricultural operating procedure and/or entry into a field, the analysis/evaluation unit (10) starts up with an initial characteristic diagram as the characteristic diagram (34) which is adapted to the agricultural operating procedure during the course thereof, in particular on the basis of sensor data from the sensor assembly.

10. The forage harvester according to claim 9, **characterized in that** the analysis/evaluation unit (10) derives the measure of the knife sharpness from the characteristic diagram (34), preferably in that the analysis/evaluation unit (10) derives the measure of the cutting sharpness from at least one characteristic feature of the characteristic diagram (34) and/or from a variation in the characteristic diagram (34) and/or by comparison with comparative data.

11. The forage harvester according to claim 9 or claim 10, **characterized in that** during the derivation of the measure of the cutting sharpness, in particular from the characteristic diagram, the parameters for the layer height of the flow of harvested material (6) and/or the moisture content of the flow of harvested material (6) and/or the flow rate of the flow of harvested material (6), in particular the speed of an intake roller (13, 14), are assumed to be at least one fixed observation point (P).

12. The forage harvester according to one of the preceding claims, **characterized in that** the driver assistance system (4) has a display unit (35) for displaying the cutting sharpness, preferably in the form of a bar graphic (36).

13. The forage harvester according to one of the preceding claims, **characterized in that** the cutting sharpness is displayed on the display unit (35) with the aid of a scale (38), wherein the scale (38) has a minimum sharpness icon (39) which displays a cutting sharpness to which the chopping knives (9) are re-sharpened, and/or an initial sharpness icon (40) which displays a cutting sharpness which was obtained with the last re-sharpening.

14. The forage harvester according to claim 13, **characterized in that** the position of the minimum sharpness icon (39) and/or of the initial sharpness icon (40) on the scale (38) can be set and/or displaced by the operator.

15. A method for operating a forage harvester (1) according to one of claims 1 to 14,
**characterized in that**
a slippage in the drive train (7) of the chopping unit (5) is determined and this slippage is processed in the analysis/evaluation unit (10) in a manner such that a measure of the cutting sharpness of the chopping knives (9) is derived.

## Revendications

1. Ramasseuse-hacheuse dotée de plusieurs organes de travail (2) destinés à effectuer et/ou assister un travail agricole, comprenant un dispositif d'entraînement (3) pour l'entraînement des organes de travail (2) et comprenant un système d'assistance au conducteur (4) destiné à activer et/ou surveiller les organes de travail (2),
dans laquelle un organe de travail (2) est un organe de hachage (5) destiné à hacher un flux de récolte (6) ramassé par la ramasseuse-hacheuse (1), l'organe de hachage (5) étant entraîné par le dispositif d'entraînement (3), par l'intermédiaire d'une chaîne cinématique (7),
dans laquelle l'organe de hachage (5) présente un ensemble de couteaux de hachage (8) comportant des couteaux de hachage (9), et dans laquelle le système d'assistance au conducteur (4) présente une unité d'analyse-évaluation (10),
**caractérisée en ce que**
le système d'assistance au conducteur (4) est configuré de manière à ce qu'un patinage soit déterminé dans la chaîne cinématique (7) de l'organe de hachage (5), et que ce patinage soit traité dans l'unité d'analyse-évaluation (10) de manière à déduire une valeur pour le tranchant des couteaux de hachage (9), le système d'assistance au conducteur (4) présentant un dispositif à capteur (28) pour déterminer le patinage dans la chaîne cinématique (7) de l'organe de hachage (5).

2. Ramasseuse-hacheuse selon la revendication 1, **caractérisée en ce que** l'ensemble de couteaux de hachage (8) présente un tambour hacheur (15) sur lequel sont disposés les couteaux de hachage (9), et **en ce que** l'organe de hachage (5) présente un dispositif de contre-couteau (16) doté d'un contre-couteau (17) et coopérant avec l'ensemble de couteaux de hachage (8).

3. Ramasseuse-hacheuse selon la revendication 1 ou 2, **caractérisée en ce que** la ramasseuse-hacheuse (1) présente un dispositif d'affûtage (18) pouvant être entraîné par un entraînement et doté d'un outil d'affûtage pour affûter les couteaux de hachage (9).

4. Ramasseuse-hacheuse selon une des revendications précédentes, **caractérisée en ce que** la chaîne cinématique (7) présente une transmission à courroie (24) par l'intermédiaire de laquelle est entraîné le tambour hacheur (15), et **en ce que** le patinage déterminé est le patinage de la transmission à courroie (24) sur le tambour hacheur (15).

5. Ramasseuse-hacheuse selon la revendication 4, **caractérisée en ce que** dans la chaîne cinématique (7), notamment en aval de l'organe de hachage (5), il est prévu un galet (25) destiné à déterminer une vitesse de rotation de référence, la vitesse de rotation de référence servant à déterminer le patinage, de préférence **en ce que** le galet (25) est placé dans la transmission à courroie (24) directement en aval d'une poulie de courroie (27) du tambour hacheur (15) reliée de façon solidaire en rotation au tambour hacheur (15).

6. Ramasseuse-hacheuse selon la revendication 5, **caractérisée en ce que** le dispositif à capteur (28) présente un capteur de vitesse de rotation (29), destiné à déterminer la vitesse de rotation du tambour hacheur (15), et un capteur de vitesse de rotation (30) destiné à déterminer la vitesse de rotation de référence du galet (25), et **en ce que** l'on détermine le patinage du tambour hacheur (15) à partir de la vitesse de rotation du tambour hacheur (15) et de la vitesse de rotation de référence.

7. Ramasseuse-hacheuse selon la revendication 6, **caractérisée en ce que** le dispositif à capteur (28) présente au moins un capteur (31, 32, 33) du groupe comprenant :
un capteur de hauteur de couche (31) pour déterminer la hauteur de couche du flux de récolte (6) dans la ramasseuse-hacheuse (1), le capteur de hauteur de couche (31) étant notamment placé dans le dispositif d'alimentation (12) de la ramasseuse-hacheuse (1),
un capteur d'humidité (32) pour déterminer l'humidité du flux de récolte (6) dans la ramasseuse-hacheuse (1), le capteur d'humidité (32) étant placé notamment dans le dispositif d'alimentation (12) et/ou dans la goulotte d'éjection de la ramasseuse-hacheuse (1),
un capteur (33) pour mesurer la vitesse d'écoulement du flux de récolte (6) dans la ramasseuse-hacheuse (1), le capteur (33) étant de préférence placé dans le dispositif d'alimentation (12).

8. Ramasseuse-hacheuse selon la revendication 7, **caractérisée en ce que** l'unité d'analyse-évaluation (10) établit un diagramme caractéristique (34) et/ou adapte un diagramme caractéristique (34) et/ou sélectionne un diagramme caractéristique (34), sur la base des données de capteur recueillies par le dispositif à capteur (28), notamment à partir du patinage déterminé par capteur et/ou des paramètres « hauteur de couche » et/ou « humidité » et/ou « vitesse d'écoulement ».

9. Ramasseuse-hacheuse selon une des revendications 6 à 8, **caractérisée en ce que**, au début du processus de travail agricole et/ou d'une entrée dans un champ, l'unité d'analyse-évaluation (10) démarre avec un diagramme caractéristique initial en tant que diagramme caractéristique (34), qui est adapté au processus de travail agricole, au cours de celui-ci, notamment sur la base des données de capteur du dispositif à capteur.

10. Ramasseuse-hacheuse selon la revendication 9, **caractérisée en ce que** l'unité d'analyse-évaluation (10) déduit la valeur pour le tranchant des couteaux à partir du diagramme caractéristique (34), de préférence **en ce que** l'unité d'analyse-évaluation (10) déduit la valeur pour le tranchant à partir d'au moins une caractéristique du diagramme caractéristique (34) et/ou d'une variation du diagramme caractéristique (34) et/ou par rapport à des données de comparaison.

11. Ramasseuse-hacheuse selon une des revendications 9 ou 10, **caractérisée en ce que** lors de la déduction de la valeur pour le tranchant, notamment à partir du diagramme caractéristique, les paramètres pour la hauteur de couche du flux de récolte (6) et/ou l'humidité du flux de récolte (6) et/ou la vitesse d'écoulement du flux de récolte (6), notamment la vitesse de rotation d'un rouleau d'alimentation (13, 14) sont admis au titre d'au moins un point d'observation (P) fixe.

12. Ramasseuse-hacheuse selon une des revendications précédentes, **caractérisée en ce que** le système d'assistance au conducteur (4) présente une unité d'affichage (35) destinée à afficher le tranchant, de préférence sous la forme d'un graphique à barres (36).

13. Ramasseuse-hacheuse selon une des revendications précédentes, **caractérisée en ce que** le tranchant est indiqué sur l'unité d'affichage (35) à l'aide d'une échelle (38), ladite échelle (38) présentant une icône de tranchant minimum (39) qui indique un tranchant pour l'obtention duquel les couteaux de hachage (9) sont soumis à un réaffûtage, et/ou présentant une icône de tranchant initial (40) indiquant un tranchant qui a été atteint avec le dernier réaffûtage.

14. Ramasseuse-hacheuse selon la revendication 13, **caractérisée en ce que** la position de l'icône de tranchant minimal (39) et/ou de l'icône de tranchant initial (40) peut être placée et/ou déplacée sur l'échelle (38) par l'utilisateur.

15. Procédé pour faire fonctionner une ramasseuse-hacheuse (1) selon une des revendications 1 à 14,
**caractérisée en ce que**
dans la chaîne cinématique (7) de l'organe de hachage (5), un patinage est déterminé et ce patinage est traité dans l'unité d'analyse-évaluation (10) de manière à déduire une valeur pour le tranchant des couteaux de hachage (9).
